# FASCICULE DE BREVET EUROPEEN

(11) **EP 0 321 333 B1**
(45) Date de publication et mention de la délivrance du brevet: **21.07.1993**
(21) Numéro de dépôt: 88403164.2
(22) Date de dépôt: 13.12.1988
(51) Int. Cl.: A47G 21/04

(54) **Cuillère ou spatule à usage alimentaire**
Löffel oder Spatel für Lebensmittel
Spoon or spatula for taking food

(30) Priorité: 17.12.1987 FR 8717967; 19.04.1988 FR 8805270
(43) Date de publication de la demande: 21.06.1989
(73) Titulaire: SA G.A.D., F-63803 Cournon (FR)
(72) Inventeur: Rambin, Christian, F-42410 Pelussin Maclas (FR)
(74) Mandataire: Bugnon-Hays, Claudine

(56) Documents cités:
- CH-A- 220 472
- FR-A- 638 064
- FR-A- 2 158 298
- FR-A- 2 583 968
- US-A- 4 215 628

## Description

La présente invention a pour objet une cuillère ou spatule à usage alimentaire.

Les cuillères sont des ustensiles utilisés dans de très nombreuses applications pour servir différents mets, pour les remuer ou pour les consommer. C'est ainsi notamment que des cuillères sont utilisées pour assurer le mélange du sucre à l'intérieur d'une tasse de café, l'homogénéisation de sirops à l'intérieur d'un verre, ou encore pour la consommation de certains aliments tels que de la soupe.

Plus particulièrement dans le cadre de la restauration rapide, il est de plus en plus fait appel à des ustensiles tels que des fourchettes, couteaux ou cuillères, à usage unique, réalisés en matière synthétique. Ainsi, on connaît maintenant le conditionnement d'un certain nombre de produits alimentaires sous forme de doses dans des emballages jetables. Par exemple, le sucre, destiné à être incorporé soit dans du café ou une autre boissson, soit dans d'autres aliments tels que yaourts ou fromages blancs, et conditionné dans des sachets, le sucre étant sous forme de poudre ou en morceaux.

Cependant, un tel conditionnement nécessite de s'approvisionner à la fois en ustensiles pour remuer et d'autre part, en doses de produit. De plus, ces doses de produit, lorsqu'elles sont comme le sucre, laissées à la disposition du consommateur, sur un bar par exemple, sont souvent détériorées et deviennent de ce fait impropres à la consommation.

De plus, il faut noter que le prix de revient de ce type de produits conditionnés en doses dans des emballages, est élevé.

Pour remédier à une partie de ces inconvénients, on connaît déjà dans l'art antérieur, le brevet GB-A 012 636 et la demande de brevet FR-A- 2622 424, décrivant une cuillère dont au moins la partie en creux sert au logement d'un produit alimentaire, cette partie en creux étant fermée par thermocollage d'une pastille munie d'une languette d'arrachage dépassant de la cuillère.

On peut ainsi loger dans ce type de cuillère du sucre en poudre ou d'autres produits alimentaires tels que de la confiture, du sirop etc....

Cependant, ce type de cuillère à usage alimentaire n'est pas économique à mettre en oeuvre et présente des contraintes de fabrication puisqu'il faut incorporer le produit alimentaire avant de fermer sa partie en creux à l'aide d'une pastille.

Il est également connu par les brevets FR-A-2 583 968, FR-A-2 158 298 et US-4 215 628 de rapporter le produit alimentaire par surmoulage sur l'extrémité d'un manche comportant éventuellement comme dans le document US-A-4 215 628, des éléments d'ancrage réalisés préalablement sur la partie destinée à recevoir le produit alimentaire.

On comprend bien qu'une telle technique n'autorise pas la libération du produit avant sa consommation, dans le cas d'une prescription de ce produit par exemple, de manière à n'utiliser la spatule qu'en tant que cuillère.

La présente invention vise donc à remédier à tous les inconvénients sus-mentionnés et concerne une cuillère ou spatule destinée au logement d'un produit alimentaire, le produit alimentaire étant maintenu par pincement élastique et ladite cuillère ou spatule pouvant également servir d'agitateur.

A cet effet, la cuillère ou spatule selon l'invention est constituée par une spatule comportant un manche et une extrémité munie d'une cavité, servant au logement d'un produit alimentaire, des moyens de pincement élastique étant prévus pour assurer le maintien du produit alimentaire à l'intérieur de ladite cavité, ou sa libération.

Cette réalisation selon l'invention est particulièrement avantageuse d'un point de vue économique puisque la cuillère forme elle-même un récipient, ce qui limite les coûts d'emballage et de transport, ainsi que le nombre des produits à approvisionner par un restaurateur, permet un dosage parfait des produits, et évite la dégradation des produits laissés à la disposition des consommateurs. Avantageusement, la cuillère ou spatule suivant l'invention, met en oeuvre simplement un système de pincement, cette dite cuillère ou spatule et le produit alimentaire étant conditionnés dans un emballage de protection.

De façon générale, la cuillère ou spatule selon l'invention, est réalisée de façon à présenter une rigidité suffisante pour le maintien du produit alimentaire, tandis que l'élasticité de la matière synthétique utilisée pour la fabrication d'une telle cuillère ou spatule, permet également de libérer ledit produit alimentaire avant sa consommation.

De façon plus précise, selon la présente invention, la cuillère ou spatule se présente sous la forme d'un manche creux présentant une certaine rigidité tandis que la cavité destinée à maintenir le produit alimentaire est également munie de moyens de raidissement, cette rigidité étant nécessaire à la fois pour le maintien du produit alimentaire et pour que la cuillère ou spatule puisse servir d'agitateur. Cependant, cette rigidité du manche et de ladite cavité servant au maintien du produit alimentaire est juste suffisante pour que ladite cuillère ou spatule garde une certaine souplesse permettant de dégager ledit produit alimentaire.

Dans le cas du sucre en morceaux, l'étape d'ouverture afin de libérer ledit produit alimentaire, n'est cependant pas nécessaire puisqu'il suffit de plonger la spatule, qui sert également d'agitateur, par exemple dans du café, pour dissoudre le morceau de sucre.

Dans une première forme de réalisation de la cuillère ou spatule selon l'invention, ladite cavité se présente sous la forme d'un fond plat muni de deux rebords transversaux constituant lesdits moyens de pincement élastiques, de façon à maintenir le produit alimentaire à l'intérieur de ladite cavité.

Dans une autre forme de réalisation de la cuillère ou spatule selon l'invention, ladite cavité se présente sous la forme d'une fente élastique constituant les moyens de pincement dudit produit alimentaire.

Les autres avantages et réalisations de la présente invention ressortiront de la description qui va suivre en se référant aux dessins annexés :
- la figure 1: est une vue en perspective de la cuillère ou spatule selon l'invention ;
- la figure 2: est une vue de dessous de la cuillère ou spatule selon l'invention ;
- la figure 3: est une vue en coupe selon la ligne A-A de la figure 1 ;
- la figure 4: est une vue détaillée d'un deuxième mode de réalisation des moyens de pincement selon l'invention ;
- la figure 5: est une vue détaillée d'un deuxième mode de réalisation des moyens de pincement selon l'invention ;
- la figure 6: est une vue détaillée d'un troisième mode de réalisation des moyens de pincement selon l'invention ;
- la figure 7: est une vue en perspective de la cuillère ou spatule selon un deuxième mode de réalisation de l'invention.

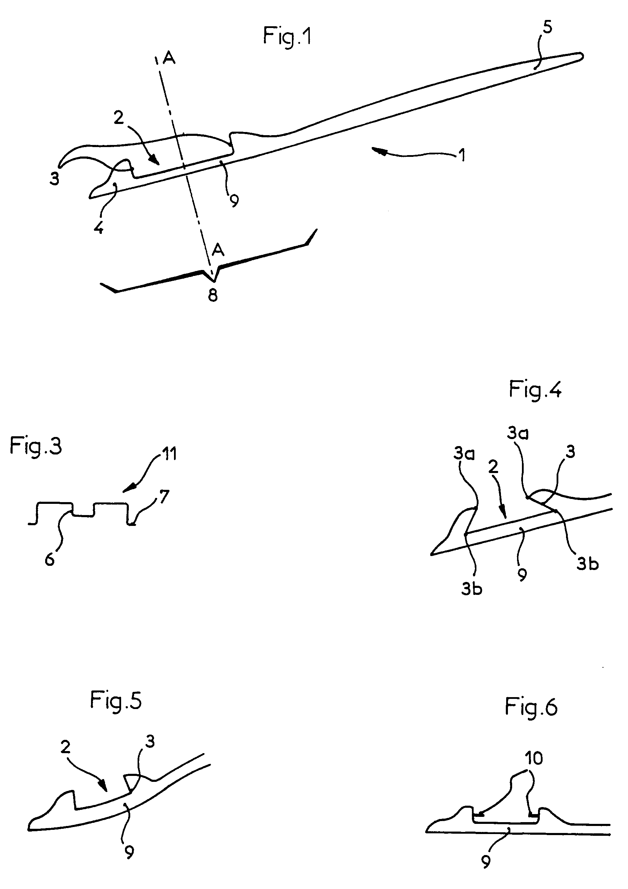

Selon l'invention telle que représentée (figures 1 et 2), la cuillère ou spatule à usage alimentaire est constituée par une spatule (1) comportant un manche (5) et une extrémité (8) munie d'une cavité (2), servant au logement d'un produit alimentaire, des moyens de pincement (3, 12) étant prévus pour assurer le maintien du produit à l'intérieur de ladite cavité (2).

Cette dite cuillère ou spatule selon l'invention, est réalisée par thermoformage d'une plaque en matière synthétique afin d'obtenir un manche (5) creux, l'ensemble de cette plaque thermoformée comportant des moyens de raidissements (11) afin d'obtenir une cuillère ou spatule (1) relativement rigide et légère.

De façon plus précise, ladite cuillère ou spatule (1) comporte des moyens de raidissements (11) constitués d'une part d'un rebord plat (7) entourant le pourtour extérieur de ladite cuillère ou spatule (1) (figure 3) et d'autre part une rainure de renfort (6) centrée longitudinalement le long du fond (9) de ladite cavité (2).

Cependant, malgré ces moyens de raidissements (11), l'élasticité de ladite matière synthétique utilisée pour fabriquer la cuillère ou spatule (1) est également nécessaire au maintien du produit alimentaire entre lesdits moyens de pincement (3, 12) ainsi qu'à la libération dudit produit alimentaire par faible pression sur le moyen d'ouverture (4) de ladite spatule (1)tel que représenté sur la figure (1).

Dans un mode préféré de réalisation de l'invention telle que représentée sur la figure (1), ladite cavité (2) se présente sous la forme d'un fond plat (9) muni de deux rebords transversaux (3), constituant lesdits moyens de pincement (3, 12) de ladite cuillère ou spatule (1).

Cependant, cesdits deux rebords transversaux (3) de ladite cavité (2) peuvent être réalisés de différentes manières.

En effet, dans un premier mode de réalisation de l'invention tel que représenté sur la figure 4, les deux rebords transversaux (3) de ladite cavité (2) forment chacun un angle aigu avec le fond plat (9)de ladite cavité (2), dirigé vers l'intérieur de ladite cavité (2), l'écartement entre les deux bords supérieurs (3a) étant inférieur à celui séparant les deux bords inférieurs (3b), des deux rebords transversaux (3), de manière à permettre le pincement dudit produit alimentaire.

Dans une deuxième variante de réalisation selon l'invention telle que représentée sur la figure (5) les deux rebords transversaux (3) forment un angle droit avec le fond plat (9) de ladite cavité (2) tandis que le pincement est réalisé par une opération de galbage vers le haut de ladite cuillère ou spatule (1) le long de ladite extrémité (8), afin que celle-ci présente une courbure équivalente du point de vue forme à celle d'une cuillère à usage normal. Dans ce cas de figure, on utilise là-encore, l'élasticité de la matière synthétique qui permet d'opérer ce galbage et donc d'obtenir le maintien du produit alimentaire.

Enfin, on peut également envisager dans une troisième variante de réalisation représentée selon la figure (5), le fait que chacun des deux rebords transversaux (3) de la cavité (2) est muni d'un téton (10) servant de point d'ancrage audit produit alimentaire à loger dans ladite cavité (2).

Dans cette troisième variante de réalisation selon la figure (5), le produit alimentaire utilisé doit être de dureté plus faible que celle desdits tétons (10) afin de ne pas casser ces derniers.

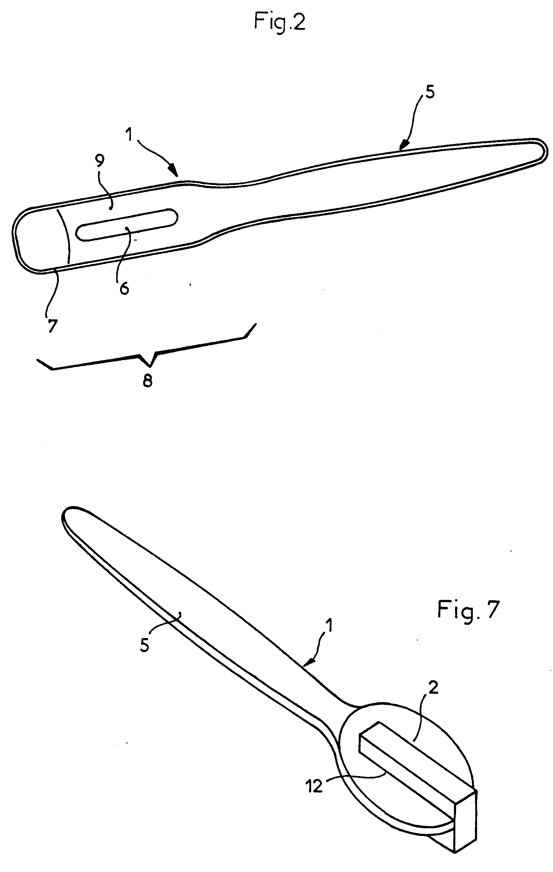

Par ailleurs, dans une deuxième forme de réalisation de l'invention telle que représentée sur la figure 7, ladite cavité (2) se présente alors sous la forme d'une fente élastique (12) jouant le rôle desdits moyens de pincement (3, 12) et permettant alors le maintien dudit produit alimentaire.

De façon générale, l'invention telle que décrite ci-dessus, apporte une grande amélioration à la technique existante en fournissant une cuillère ou spatule de conception simple servant de contenant pour certains produits alimentaires destinés à être agités ou à être consommés à l'aide de cette dit cuillère ou spatule qui constitue une solution très économique et hygiénique.

De plus, toutes ces variantes de réalisation telles que décrites ci-dessus sont applicables au maintien d'un morceau de sucre ou d'autres produits alimentaires comme la sucrette. A cet effet, la sucrette étant plus petite qu'un morceau de sucre, l'écartement séparant lesdits moyens de pincement (3, 12) est alors adapté au produit alimentaire destiné à être logé dans ladite cavité (2).

## Revendications

1. Cuillère ou spatule à usage alimentaire du type comportant un manche (5) et une extrémité (8) munie d'une cavité (2), servant au logement d'un produit alimentaire, caractérisée en ce que ladite cavité (2) comporte des moyens de pincement élastiques (3, 12) pour assurer le maintien du produit à l'intérieur de ladite cavité (2), ou sa libération.

2. Cuillère ou spatule à usage alimentaire selon la revendication 1, caractérisée en ce qu'elle est réalisée par thermoformage à partir d'une plaque en matière synthétique afin d'obtenir un manche (5) creux, l'ensemble de cette plaque thermoformée portant des moyens de raidissement (11) afin d'obtenir une cuillère ou spatule (1) relativement rigide et légère.

3. Cuillère ou spatule à usage alimentaire selon l'une quelconque des revendications 1 et 2, caractérisée en ce que lesdits moyens de raidissement (11) sont constitués, d'une part, par un rebord plat (7) entourant le pourtour extérieur de ladite spatule (1), et d'autre part, par une rainure de renfort (6) centrée longitudinalement le long du fond (9) de ladite cavité (2).

4. Cuillère ou spatule à usage alimentaire selon l'une quelconque des revendications 1 à 3, caractérisée en ce que ladite cavité (2) se présente sous la forme d'un fond plat (9) muni de deux rebords transversaux (3) constituant lesdits moyens de pincement élastiques de façon à maintenir le produit alimentaire à l'intérieur de ladite cavité (2).

5. Cuillère ou spatule à usage alimenaire selon la revendication 4, caractérisée en ce que lesdits deux rebords transversaux (3) de ladite cavité (2) forment chacun un angle aigu avec le fond plat (9) de ladite cavité (2), dirigé vers l'intérieur de ladite cavité (2), l'écartement entre les deux bords supérieurs (3a) étant inférieur à celui séparant les deux bords inférieurs (3b) desdits deux rebords transversaux (3), afin de permettre le pincement élastique du produit alimentaire.

6. Cuillère ou spatule à usage alimentaire selon la revendication 4, caractérisée en ce que les deux rebords transversaux (3) de ladite cavité (2) forme un angle droit avec le fond plat (9) de ladite cavité (2).

7. Cuillère ou spatule à usage alimentaire selon la revendication 6, caractérisée en ce que l'extrémité (8) est galbée dans une forme concave vers le dessus de ladite cavité ou spatule (1).

8. Cuillère ou spatule à usage alimentaire selon la revendication 1, caractérisée en ce que ladite cavité (2) se présente sous la forme d'une fente élastique (12) constituant lesdits moyens de pincement élastique et permettant le pincement dudit produit alimentaire.

9. Cuillère ou spatule à usage alimentaire selon l'une quelconque des revendications 1 à 8, caractérisée en ce que l'écartement séparant les moyens de pincement élastique (3, 12) est adapté à la dimension du produit alimentaire à loger ainsi qu'à sa position.

## Claims

1. A spoon or a spatula for food use of the type comprising a handle (5) and an end (8) provided with a cavity (2) for housing a food product, characterized in that said cavity (2) consists of elastic gripping means (3, 12) for holding the product inside said cavity (2) or releasing it.

2. A spoon or a spatula for food use as set forth in claim 1 wherein said spoon or spatula is made by a thermoforming process from a synthetic plate so as to obtain a hollow handle (5), the whole thermoformed plate being provided with stiffening means (11) so as to obtain a spoon or a spatula (1) which is relatively rigid and light.

3. A spoon or a spatula for food use as set forth in claims 1 and 2, wherein said stiffening means (11) are made of a flat rim (7) surrounding the outer circumference of said spatula (1) on the one hand, and a strengthening groove (6) which is centered lengthwise along the bottom (9) of said cavity (2).

4. A spoon or a spatula for food uses as set forth in any one of claims 1 to 3, wherein said cavity (2) consists of a flat bottom (9) provided with two cross rims (3) forming said elastic gripping means so as to hold the food product inside said cavity (2).

5. A spoon or a spatula for food use as set forth in claim 4, wherein each of both cross rims (3) of said cavity (2) forms an acute angle with the flat bottom (9) of said cavity, directed towards the inside of said cavity (2), the space between both upper rims (3a) being smaller than the space between both lower rims (3b) of the two crosswise rims (3) so as to make the elastic gripping of the food product possible.

6. A spoon or a spatula for food use as set forth in claim 4, wherein both crosswise rims (3) of said cavity (2) form a right angle with the flat bottom ( 9) of said cavity (2).

7. A spoon or a spatula for food use as set forth in claim 6, wherein the end (8) is curved according to a concave shape towards the top of said cavity or the spatula (1).

8. A spoon or a spatula for food use as set forth in claim 1, wherein said cavity (2) consists of an elastic slot (12) forming said elastic gripping means and so as to make the elastic gripping of said food product possible.

9. A spoon or a spatula for food use as set forth in any one of claims 1 to 8, wherein the space between the elastic gripping means (3, 12) is adapted to the dimension as well as the position of the food product to be housed.

## Patentansprüche

1. Löffel oder Schaber für Nahrungsmittel des Typs mit Griff (5) und einer Spitze (8) versehen mit einer Vertiefung (2) zur Unterbringung eines Nahrungsmittels, dadurch gekennzeichnet, daß die besagte Vertiefung (2) nachgiebige Klemmittel (3, 12) zur Gewährleistung des Produkthalts in der besagten Vertiefung (2) oder zu seinem Freisetzen aufweist.

2. Löffel oder Schaber für Nahrungsmittel entsprechend Patentanspruch 1 dadurch gekennzeichnet, daß er durch Warmformung aus einer Synthetikmaterialplatte hergestellt ist, um einen hohlen Griff (5) zu erhalten, wobei die warmgeformte Platteneinheit Versteifungen (11) trägt, um einen relativ festen und leichten Löffel oder Schaber (1) zu erhalten.

3. Löffel oder Schaber für Nahrungsmittel entsprechend irgendeinem der Patentansprüche 1 und 2 dadurch gekennzeichnet, daß die besagten Versteifungen (11) einerseits aus einem flachen Außenrand (7) rings um den Außenumfang des besagten Schabers (1) bestehen, und andererseits aus einer Verstärkungskehle (6), die longitudinal längs des tiefsten Teils (9) der besagten Vertiefung (2) zentriert ist.

4. Löffel oder Schaber für Nahrungsmittel entsprechend irgendeinem der Patentansprüche 1 bis 3 dadurch gekennzeichnet, daß die besagte Vertiefung (2) die Form eines Flachbodens (9) hat, der mit zwei seitlichen Rändern (3) versehen ist, die besagte nachgiebige Einklemmittel derart bildet, daß das Nahrungsmittel in der benannten Vertiefung (2) gehalten wird.

5. Löffel oder Schaber für Nahrungsmittel entsprechend des Patentanspruchs 4 dadurch gekennzeichnet, daß die besagten Transversalränder (3) der benannten Vertiefung (2) jeweils einen spitzen Winkel mit dem Flachboden (9) der genannten Vertiefung (2) bilden, wobei der Abstand der beiden oberen Ränder (3a) geringer ist als der, welcher die beiden unteren Ränder (3b) der besagten Transversalränder (3) trennt, um die nachgiebige Einklemmung des Nahrungsmittels zu ermöglichen.

6. Löffel oder Schaber für Nahrungsmittel entsprechend des Patentanspruchs 4 dadurch gekennzeichnet, daß die beiden Transversalränder (3) der benannten Vertiefung (2) einen rechten Winkel mit dem Flachboden (9) der besagten Vertiefung (2) bilden.

7. Löffel oder Schaber für Nahrungsmittel entsprechend des Patentanspruchs 6 dadurch gekennzeichnet, daß die Außenkante (8) leicht in einer konkaven Form zu der Oberseite der besagten Vertiefung oder Schaber (1) gewölbt ist.

8. Löffel oder Schaber für Nahrungsmittel entsprechend des Patentanspruchs 1 dadurch gekennzeichnet, daß die besagte Vertiefung (2) die Form eines nachgiebigen Spalts (12) hat, der die benannten nachgiebigen Einklemmittel bildet und die Einklemmung des besagten Nahrungsmittels ermöglicht.

9. Löffel oder Schaber für Nahrungsmittel entsprechend irgendeinem der Patentansprüche 1 bis 8 dadurch gekennzeichnet, daß der die nachgiebigen Klemmittel (3, 12) trennende Abstand der Abmessung des unterzubringenden Nahrungsmittels sowie seiner Position richtig bemessen ist.
